(19) Europäisches Patentamt
European Patent Office
Office européen des brevets

(11) EP 2 326 021 A1

(12) EUROPEAN PATENT APPLICATION

(43) Date of publication:
25.05.2011 Bulletin 2011/21

(51) Int Cl.:
$H04B \ 1/69 \ ^{(2011.01)}$

(21) Application number: 10170853.5

(22) Date of filing: 27.07.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 23.11.2009 US 263708 P

(71) Applicant: Stichting IMEC Nederland
5656 AE Eindhoven (NL)

(72) Inventor: Pflug, Hans
5582 AB Waalre (NL)

(74) Representative: Sarlet, Steven Renaat Irène et al
Gevers
Intellectual Property House
Holidaystraat 5
1831 Diegem (BE)

(54) **Method and transmitter device for selecting transmission signal power level**

(57) The present application relates to a method for generating a pulsed transmission signal. The method comprises the steps of generating a plurality of transmission bursts by encoding data with a predetermined spreading code, each of said bursts comprising a train of pulses defining a burst length of the burst; and sizing the transmission bursts to a peak power level within a predetermined limit, thereby forming said transmission signal. The sizing of the transmission bursts comprises the step of modifying the amplitude of the pulses of the burst on the basis of a predetermined relationship between the burst length and the peak/average transmission power level. The present application further relates to a transmitter device implementing the method.

$$\left[\frac{A}{\sqrt{2}}\left(1 - 2Q\left(\frac{\tau_{eff}}{2\sigma}\right)\right)\right]^2 \frac{G_{ant}}{R_{load}}$$

Figure 4

EP 2 326 021 A1

**Description**

**FIELD**

The present invention relates to communication systems, more particularly to a method for selecting a transmission signal power level and a transmitter device implementing same.

**BACKGROUND**

The regulatory requirements given by standard associations like for example IEEE 802.15.4a specify limits for the average equivalent isotropic radiated power (EIRP) and peak EIRP levels for wireless communication devices. In the specific case of UWB, the average EIRP is measured in a 1 MHz resolution band-width (RBW) using a Root Mean Square (RMS) average detector and referenced to an ideal Gaussian bandwidth. The peak power spectral density (PSD) of an Ultra-Wide Band (UWB) transmission is the peak power in a Gaussian filter with a bandwidth of 50 MHz (swept receiver architecture or oscilloscope with data postprocessing). Peak power mainly influences the RF front end of a receiver, e.g. the saturation of the low noise amplifier. Therefore the measurement bandwidth is chosen to represent the widest bandwidth of a susceptible in-band receiver. Most spectrum analyzers only have an 8 MHz or less IF bandwidth filter available at maximum. The ITU recommended correction factor from 8 to 50 MHz is insufficiently accurate.

**DISCLOSURE OF THE INVENTION**

It is an aim of the present invention to provide a method which makes it possible to generate a pulsed transmission signal with an improved amplitude level.

The present invention presents a method for generating a pulsed transmission signal. The method comprises the steps of generating a plurality of transmission bursts by encoding data with a predetermined spreading code. Each of these bursts comprises a train of adjacent pulses defining a burst length of the burst. Further, the transmission bursts are sized or modified to obtain a transmission peak and/or average power level within a predetermined limit (e.g. below a predetermined maximum peak/average transmission power level), thereby forming the pulsed transmission signal which is ready for transmission. The sizing for at least one of the plurality of bursts comprises: modifying the amplitude of the pulses on the basis of a predetermined relationship between the burst length and the peak/average transmission power level, said modification being such that the peak/average transmission power level is modified towards said predetermined limit. This means that for each different burst length, a different pulse amplitude can be applied, which can be chosen such that the peak/average transmission power level of the burst approaches the predetermined limit as close as possible.

By using this method, it is possible to transmit at higher output power. The performance of a wireless link can be enhanced and/or power consumption of a radio can be lowered. Using different amplitudes for different burst-length or codes can improve the integral wireless link performance.

The choice of imposing a limit for the average power or the peak power of the transmission signal can be made dependent on the pulse repetition frequency (PRF) of the pulses in the burst.

In an embodiment, the pulsed transmission signal comprises a plurality of frames, each frame comprising at least a first part in which the transmission bursts have a first burst length and a second part in which the transmission bursts have a second burst length and wherein a different amplitude sizing is applied over the first part with respect to the second part.

In an embodiment, each frame comprises a preamble of isolated pulses followed by a header part having a first set of the transmission bursts and a payload part having a second set of the transmission bursts. The header part can be the first part where the transmission bursts have the first burst length and the payload part can be the second part where the transmission bursts have the second burst length. Alternatively, the first and second parts can both be parts of the payload part of the frame. In general, according to the invention a plurality of different pulse amplitudes can be applied over the frame, for example a first amplitude over the header part and a second, third, ..., n-th amplitude over the payload part, i.e. a different amplitude for each burst of the payload part depending on its burst length.

In an embodiment, the predetermined relationship between the peak/average power and the burst length is defined by means of an equation, in which the peak/average power is dependent on the peak amplitude of pulses in the transmission signal, the number of bursts in the transmission signal taken into account, the load impedance of a transmitter used for transmitting the transmission signal, the burst length, minimal time between bursts and the spectrum analyzer's resolution band-width (RBW). In this embodiment, the peak/average power level can be measured with a spectrum analyzer having a limited bandwidth, while applying a correction factor to compensate for the limited bandwidth. The correction factor is related to the spectrum analyzer's RBW filter variance for a BW wide filter and to the spectrum analyzer's RBW filter variance for a 50 MHz wide filter and to the effective pulse width. An advantage of this embodiment is the ability to predict the measured peak/average power for a given pulse duration, burst length, pulse amplitude, resolution bandwidth and load impedance.

The present invention further presents a transmitter device, comprising a baseband section provided for generating a baseband signal comprising a plurality of transmission bursts by encoding data with a predetermined spreading code, each of said bursts comprising a train of adjacent pulses defining a burst length of the burst; a local oscillator for generating a signal carrier; a modulator connected to the baseband section and the local oscillator and provided for upconverting the baseband signal by means of the signal carrier to a transmission signal and therein sizing the transmission bursts to a peak/average transmission power level within a predetermined level; and an antenna for transmitting the transmission signal. The transmitter device comprises a control means for controlling the modulator to modify the amplitude of the pulses of each burst individually on the basis of a predetermined relationship between the burst length and the peak/average transmission power level. The control means determines the modification to be applied by the modulator such that the peak/average transmission power level is modified towards the predetermined limit and for example approaches the limit as much as possible.

## BRIEF DESCRIPTION OF DRAWINGS

The invention will be further elucidated by means of the following description and the appended figures.

Figure 1 shows a structure of a data sequence.
Figure 2 shows a version of a pulse shape.
Figure 3 shows a time domain view of bursts with several spectrum analyzers IF BW filter.
Figure 4 shows a plot of the peak EIRP versus Ncpb for different spectrum analyzer IF bandwidths.
Figure 5 shows an example of three consecutive bursts.
Figure 6 shows a plot of the peak EIRP addition in PSDU section for different IEEE 802.15.4a data rate modes.
Figure 7 shows a plot of the peak EIRP addition in PSDU section for different IEEE 802.15.4a data rate modes.
Figure 8 shows a plot of the peak EIRP versus the effective pulse width for different spectrum analyzer IF bandwidths and a measurement result.
Figure 9 shows a plot of simulated peak EIRP versus the frequency.
Figure 10 shows a plot of measured peak EIRP versus the frequency.
Figure 11 schematically shows an embodiment of a transmitter implementing the method of the invention.

## MODES FOR CARRYING OUT THE INVENTION

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present invention, the only relevant components of the device are A and B.

The peak power spectral density (PSD) of an Ultra-Wide Band (UWB) transmission is the peak power in a Gaussian filter with a bandwidth of 50 MHz (swept receiver architecture or oscilloscope with data post-processing). Peak power mainly influences the RF front end of a receiver, e.g. the saturation of the low noise amplifier. Therefore the measurement bandwidth is chosen to represent the widest bandwidth of a susceptible in-band receiver. As mentioned in the background, regulations define the peak power measurement at a 50 MHz resolution bandwidth. Most spectrum analyzers only have a 8 MHz or less IF bandwidth filter available as maximum. The ITU recommended correction factor from 8 to 50 MHz is insufficiently inaccurate.

In the present disclosure, an equation for the worst-case scenario is derived. This provides on one hand (see part II below) a method for generating a pulsed transmission signal whereof the peak power level of the signal better approaches the prescribed limit, for example those of the ITU regulations, and on the other hand (see part I below) a method for estimating a peak power level of a pulsed transmission signal by applying an improved correction factor.

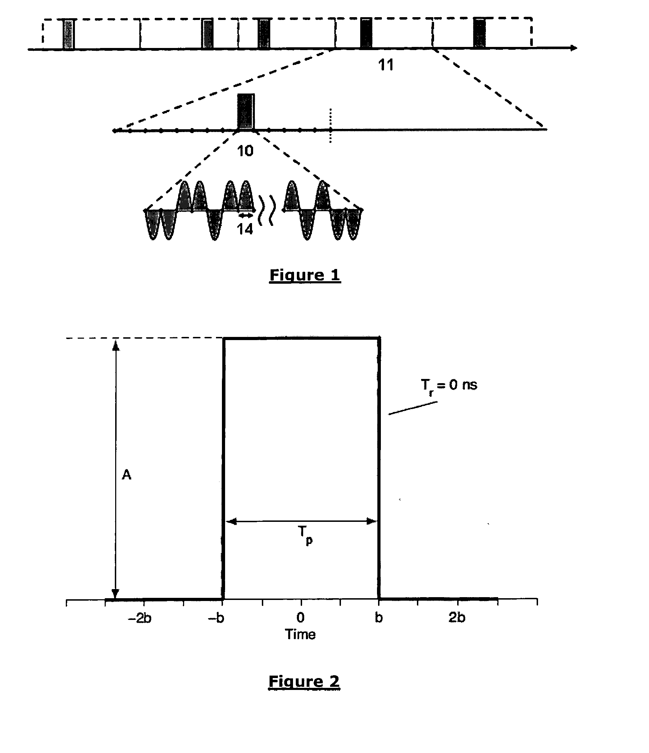

The method of the present application can be used for controlling pulsed RF signals or bursts of pulsed RF signals. The method will be illustrated by means of IEEE 802.15.4a standard compliant signals. The IEEE 802.15.4a standard deviated from the original IR-UWB air interface in a sense that the pulses (see Figure 1) are concatenated to bursts of chips (14) or pulses (the number of chips depends on the data-rate), where a chip corresponds to a pulse of about 2 ns (or less, see table I). The bursts (10) are positioned inside a symbol (a frame (11)) according to a time-hopping code and the chips within the burst are BPSK modulated and up-converted to one of the carrier frequencies according to the band plan.

### PART I: method for estimating peak power level

The IEEE 802.15.4a data sequence can be modeled as a wide-sense stationary random process, composed of equally likely symbols. Therefore we can calculate the average Power Spectral Density (PSD) by taking the Fourier transform of a single pulse. This single pulse is described in the time domain as for example a trapezoidal shaped pulse:

$$
f(t) = \begin{cases} A & \text{if } |t| \leq \frac{T_p - T_r}{2} \\ A\left(\frac{T_r + T_p - 2t}{2T_r}\right) & \text{if } \frac{T_p - T_r}{2} < |t| < \frac{T_p + T_r}{2} \\ 0 & \text{if } |t| \geq \frac{T_p + T_r}{2} \end{cases} \tag{1}
$$

With A being the pulse amplitude (which is the peak value of the modulated RF carrier), Tp being the pulse duration and Tr the rise time.

Taking the Fourier transform of (1), we find the PSD as:

$$
P(\omega) = \frac{\left|\frac{F(\omega)}{\sqrt{2}}\right|^2 mPRF}{R_{load}}
$$

$$
= \left|4A\frac{sin\left(\frac{\omega}{2}T_p\right)sin\left(\frac{\omega}{2}T_r\right)}{\omega^2 T_r}\right|^2 \cdot \frac{mPRF}{2R_{load}} \tag{2}
$$

With A being the peak voltage level of the pulse shape, Tr being the rise time, Tp the pulse or chip duration and *mPRF* the mean pulse repetition frequency. Different Tp values are available in the IEEE 802.15.4a standard as shown in Table I.

**TABLE I IEEE 802.15.4A PULSE LENGTHS**

| Bandwidth [MHz] | Pulse length [ns] |
|---|---|
| 499.2 | 2.0032 |

| (continued) | |
|---|---|
| Bandwidth [MHz] | Pulse length [ns] |
| 1081.6 | 0.9246 |
| 1331.2 | 0.7512 |
| 1354.97 | 0.7380 |

In the following part, the peak power is calculated as measured either by a spectrum analyzer or by an oscilloscope with data post-processing. An equation for a worst case scenario is derived. This provides the improved correction factor. For the case of multiple bursts falling within the IF bandwidth filter response, extra conversion equations are derived.

## PEAK POWER CALCULATION

The regulatory requirements specify limits for the average equivalent isotropic radiated power (EIRP) and peak EIRP levels for UWB devices (ITU-R, "Measurement techniques of ultra-wideband transmissions," Recommendation ITU-R SM 1754, 2006). The average EIRP is measured in a 1 MHz resolution band-width (RBW) using a r.m.s. (root mean square) average detector and referenced to an ideal Gaussian bandwidth. The peak PSD of an UWB transmission is the peak power in a Gaussian filter with a bandwidth of 50 MHz. The measurement is made using a peak detector and max hold.

Peak power mainly influences the RF front end of a receiver, e.g. the saturation of the low noise amplifier. Therefore the measurement bandwidth is chosen to represent the widest bandwidth of a susceptible in-band receiver.

Average power is a measure of the interference to a victim system. Using EIRP means the antenna has to be taken into account as well.

Measuring peak power, using a spectrum analyzer, boils down to convolving the time domain (transmitter) signal with the time domain response of a Gaussian filter (the IF band-pass filter). This filter is centered at a certain RF frequency. The output voltage is captured for each time bin, in which the analyzer measures (set by sweep time and number of samples) and the maximum value per time bin is noted. This is the value we see when using a peak detector.

Note that for different pulse shapes (triangular, trapezoidal, rectangular), the spectrum around the centre frequency gives similar results up to 50 MHz bandwidth with an accuracy better than 0.1 dB. Therefore we can do the analysis just for rectangular shapes only for convenience reasons.

A. Single rectangular pulse and peak power

A Gaussian filter at baseband can be described as following:

$$f(t) = \frac{1}{\sqrt{2\pi}\sigma}e^{-\frac{1}{2\sigma^2}t^2}$$

(3)

The width of a Gaussian filter is defined by the filter variance σ:

$$\sigma = \frac{\sqrt{2ln(10^{\frac{3}{20}})}}{\pi BW}$$

(4)

with BW being the filter bandwidth.

A single rectangular pulse can be described as:

$$g(t) = \begin{cases} A & \text{if } |t| \leq b \\ 0 & \text{if } |t| > b \end{cases}$$

$$(5)$$

Such a pulse is illustrated in Figure 2 with $T_r$ the pulse rise-time, $Tp$ the pulse or chip duration, b being half the duration of the pulse or $Tp/2$ and A being the amplitude of the pulse. Note that $T_r = 0$ns for a rectangular pulse. Convolving the two gives:

$$(f * g)(t) = \frac{A}{\sqrt{2\pi}\sigma} \int_{t-b}^{t+b} e^{-\frac{1}{2\sigma^2}\tau^2} \, d\tau \ \text{ with } b = T_p/2$$

$$(6)$$

This function resembles the normal distribution function, well known from e.g. statistics theory.

As $g(t)$ is defined around t=0, the function $(f *g)(t)$ has its maximum at t=0, which is the value taken from a spectrum analyzer using a peak detector, as required by the regulations for peak power using UWB signals.

To transform the latter equation into an integral that can be evaluated using a standard normal distribution function we use the substitution $z = \tau/\sigma$ with which (6) converts into:

$$(f * g)_{t=0} = \frac{A}{\sqrt{2\pi}} \int_{-b/\sigma}^{+b/\sigma} e^{-\frac{1}{2}z^2} \, dz$$

$$(7)$$

For this we will make use of the one-dimensional Gaussian Q-function (often referred to as the Gaussian probability integral), Q(x), which is defined as the complement (with respect to unity) of the cumulative distribution function (CDF) corresponding to the normalized (zero mean, unit variance) Gaussian random variable X. The canonical representation of this function is in the form of semi-infinite integral of the corresponding probability density function (PDF), namely:

$$Q(x) = \frac{1}{\sqrt{2\pi}} \int_{x}^{\infty} e^{-\frac{y^2}{2}} \, dy$$

$$(8)$$

Which can also be written as a definite integral form (for $x \geq 0$):

$$Q(x) = \frac{1}{\pi} \int_{0}^{\frac{\pi}{2}} e^{-\frac{x^2}{2\sin^2\theta}} \, d\theta$$

$$(9)$$

With this we can describe the peak power value for a single pulse, using equation 7 and 8 or 9 as:

$$P_{peak} = \left[\frac{A}{\sqrt{2}}\left(1 - 2Q\left(\frac{\tau_{eff}}{2\sigma}\right)\right)\right]^2 \frac{1}{R_{load}}$$

(10)

The peak power value is found by adding the extra factor of $1/\sqrt{2}$. This factor is used to take into account the RF carrier on which the baseband signal is modulated. To convert voltage into power, the voltage is squared and divided by the load impedance (typically the antenna impedance).

Example: when using a $\sqrt{0.1}$ V square pulse of 2 ns duration measured in a 50 Ohm load using a 50 MHz RBW, we measure a peak power of -16.47 dBm/50 MHz (see table II).

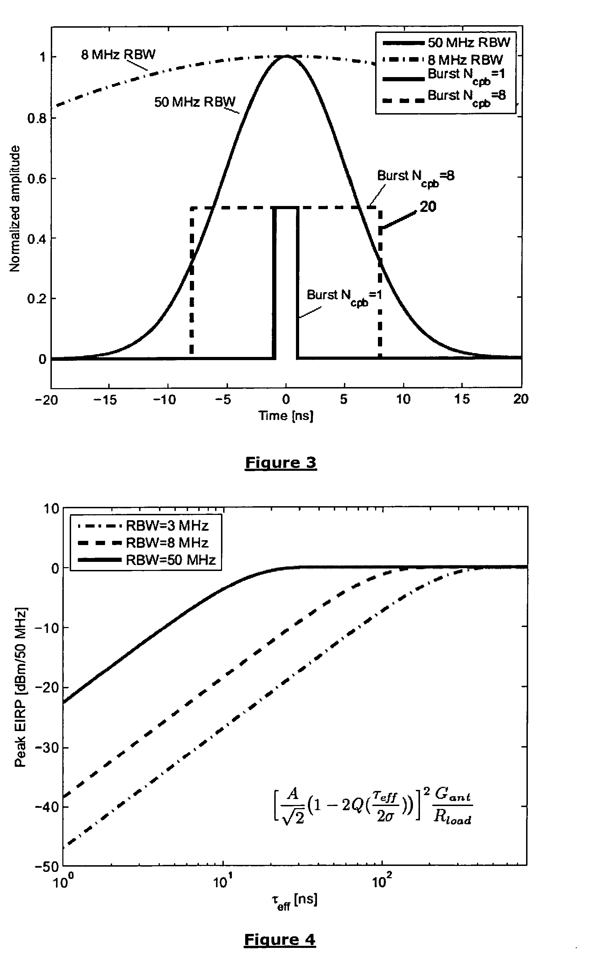

Figure 3 shows a graphical representation of a 2 ns rectangular pulse $(N_{cpb} = 1$ and $N_{cp}b = 8)$ together with the time-domain impulse response of a 50 and 8 MHz RBW Gaussian filter of a spectrum analyzer (in this case the low-pass response is shown, corresponding to a band-pass filter with 0 Hz center frequency as the measurement will show its highest value at that frequency, corresponding to the carrier frequency when looking at the RF signal instead of baseband as we do in the figure). This gives an idea of the convolution process dimensions. The Gaussian responses are normalized; the pulse is given a rectangular shape for simplicity reasons and also has an arbitrary amplitude.

The dashed line (20) shows a wider rectangular pulse, corresponding to eight times a "1" coded 2 ns pulse grouped together as a burst. The next section shows the effect wider pulses have on peak power.

B. Burst of rectangular pulses and peak power

By taking into account the length of a burst of pulses (number of pulses -known in the 802.15.4a standard as number of chips per burst-times pulse-time: $N_{cpb}T_p = T_b)$ and assuming the "all 1" or "all -1" codes produce the maximum peak power value (which is proved by simulation as shown later on), we end up with an equation for the expected peak power value for a burst of pulses as shown in Equation 11.

For a rectangular pulse, with amplitude $A$, in which we also use an extra factor of $1/\sqrt{2}$ to take into account the RF carrier on which the baseband signal is modulated, we find the following equation for the expected peak power value:

$$P_{peak} = \left[\frac{A}{2\sqrt{\pi}}\int_{-T_b/2\sigma}^{+T_b/2\sigma} e^{-\frac{z^2}{2}}\,\mathrm{d}z\right]^2 \frac{1}{R_{load}}$$

(11)

By using the effective pulse width $\tau_{eff}$ as defined by equation (14), $T_b$ can be seen as an effective pulse width of $N_{cpb}$ times the pulse width $T_p$. With that we can use equation (10) to calculate the peak power value for a wider equivalent pulse.

When performing a peak power measurement, in most cases a spectrum analyzer is used. Typically these instruments have today an IF bandwidth which is less than 50 MHz. The peak PSD limit can be scaled to a different bandwidth using a conservative scaling equation as suggested in "ITU-R, "Measurement techniques of ultra-wideband transmissions," Recommendation ITU-R SM 1754, 2006":

$$\mathrm{Limit_{RBW} = Limit_{BW} + 20\log_{10}(RBW/BW)}$$

(12)

With BW = 50 MHz.

Figure 4 plots the peak EIRP of a single burst versus the number of chips per burst $N_{cpb}$ for different spectrum analyzer bandwidth using $\sqrt{0.1}$ V rectangular pulses of 2 ns into a 50 $\Omega$ load of a 0 dBi antenna. Table II and Figure 4 show that using a spectrum analyzer with a RBW less then 50 MHz, and the above mentioned correction factor, the resulting peak power value measured for the IEEE 802.15.4a modes with a high $Ncpb$ value is too much compared with using an instrument with a 50 MHz IF filter BW. Converting the peak PSD value into peak EIRP is done by multiplying with the antenna gain factor.

$$CF = \frac{\left[50 \times 10^6 \left(1 - 2Q\left(\frac{\tau_{eff}}{2\sigma_{BW}}\right)\right)\right]^2}{\left[BW\left(1 - 2Q\left(\frac{\tau_{eff}}{2\sigma_{50}}\right)\right)\right]^2} \qquad (13)$$

$$\tau_{eff} = \int_0^{\tau_c} \frac{p(t)}{A} \, dt \qquad (14)$$

**TABLE II PEAK EIRP VS BURST LENGTH AND RBW VALUES**

| $N_{cpb}$ | $P_{peak}$[1] [dBin/50 MHz] | | |
|:---:|:---:|:---:|:---:|
| | 3 MHz[2] | 8 MHz[2] | 50 MHz |
| 1 | —16.42 | —16.42 | —16.47 |
| 2 | —10.40 | —10.40 | —10.60 |
| 4 | —4.38 | —4.40 | —5.19 |
| 8 | 1.63 | 1.56 | —1.21 |
| 16 | 7.62 | 7.33 | —0.02 |
| 32 | 13.50 | 12.41 | 0.00 |
| 64 | 18.97 | 15.45 | 0.00 |
| 128 | 23.07 | 15.92 | 0.00 |
| 512 | 24.44 | 15.92 | 0.00 |

[1] Using $T_p = 2ns$, A = $\sqrt{0.1}V$, all "1" codes
[2] Using 20log(RBW/BW) correction

The graph of Figure 4 is verified in a simulation, sweeping across all possible code combinations for each burst length value (between 2 and 20 ns) at every offset frequency around a carrier. The maximum value of every burst length curve corresponds to the values shown in table II and Figure 4.

C. Multiple Bursts

To quantify the maximum possible effect of capturing multiple consecutive bursts inside the spectrum analyzer filter, the following equation can be derived (based on a rectangular pulse shape).

$$P_{peak} = \left[\left(\frac{A}{\sqrt{2}} \sum_{i=0}^n \left\{ Q\left(\frac{t - T_b - iT_{bp}}{\sigma}\right) - \right.\right.\right.$$

$$\left.\left.\left. -Q\left(\frac{t - iT_{bp}}{\sigma}\right)\right\}\right)^2\right] \frac{1}{R_{load}} \qquad (15)$$

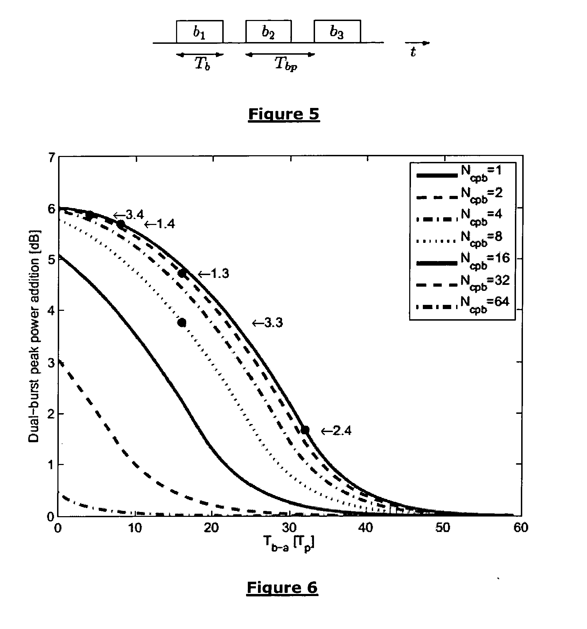

with $b_{1,2,3}$ being three consecutive bursts shown as an example in the Figure 5, $Tp$ the burst length and $T_{bp}$ the burst period. Function Q(x) as described in equation 8. Note that in the PHR (PHY header) and PSDU (PHY Service Data Unit) part of the IEEE 802.15.4a frame (Presentation Protocol Data Unit, PPDU) the time between consecutive bursts varies. In the SHR part of the frame, the intervals are the same in-between all bursts. This means that for small intervals, even more bursts could fall inside the Gaussian filter.

To calculate $P_{peak}$ we take the maximum value of $P_{peak}(t)$. As σ is a function of the spectrum analyzers resolution bandwidth (RBW), we can plot the resulting peak power for the different $N_{cpb}$ values against a few RBW values. It is important to notice that this equation is based on multiple consecutive bursts of all '1' sequences, being the worst case situation and giving the upper bound.

Taking the IEEE 802.15.4a standard as an example, focusing on the payload (PSDU) part of a frame and comparing between a spectrum analyzer with a RBW filter of 8MHz and 50 MHz we can find the impact of using a different RBW filter.

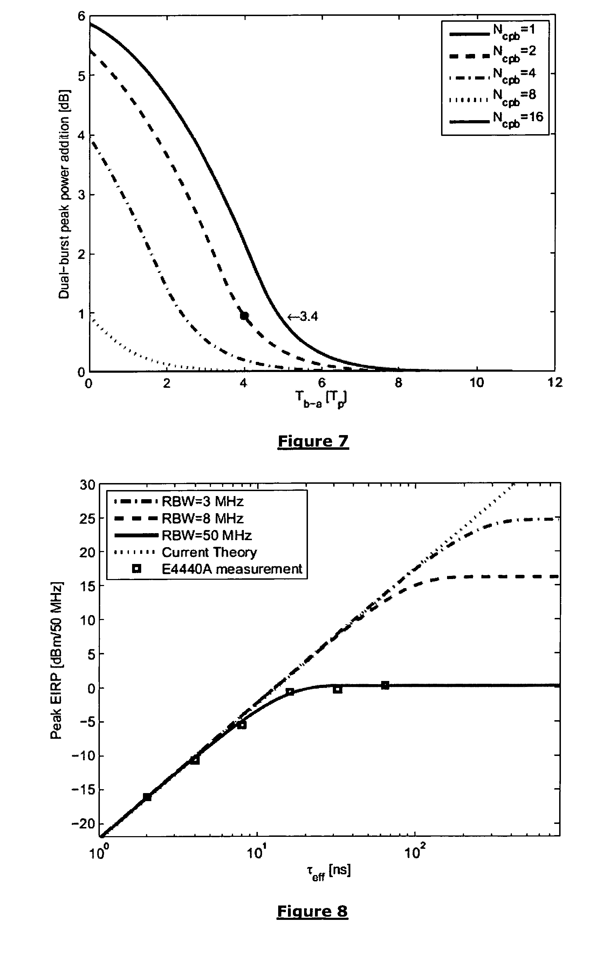

Figure 6 plots the dual burst peak EIRP addition in PSDU section for different IEEE 802.15.4a data rate modes, for RBW = 8 MHz versus $T_{b-a}$, the time interval between two consecutive bursts, giving in units of $T_p$. While Figure 7 plots the dual burst peak EIRP addition in PSDU section for different IEEE 802.15.4a data rate modes, for RBW = 50 MHz versus $T_{b-a}$, the time interval between two consecutive bursts. In Table III the values are listed for multiple burst peak EIRP addition in PSDU section for the different data modes. It can be seen from these figures (6 and 7) and Table III that it is possible of having two consecutive bursts falling inside the RBW filter of a spectrum analyzer. For two modes, we can see that even three (mode 1.4) or four (mode 3.4) bursts will fall inside the filter response. For these modes, the peak power addition is calculated to be at maximum 6.50 dB (mode 1.4) and 10.13 dB (mode 3.4), when using an 8 MHz RBW. For a 50 MHz RBW they remain 0.03 dB and 0.95 dB respectively.

**TABLE III MULTIPLE BURST PEAK EIRP ADDITION IN PSDU SECTION FOR DIFFERENT IEEE 802.15.4A DATA RATE MODES**

| Mode[1] | 8 MHz RBW [dB] | 50 MHz RBW [dB] |
|---|---|---|
| 1.1 | - | - |
| 1.2 | - | - |
| 1.3 | 4.72 | - |
| 1.4 | 6.50 | 0.03 |
| 2.1 | - | - |
| 2.2 | - | - |
| 2.3 | - | - |
| 2.4 | 1.67 | - |
| 3.1 | - | - |
| 3.2 | - | - |
| 3.3 | 3.77 | - |
| 3.4 | 10.13 | 0.95 |

**[1] see appendix for IEEE 802.15.4a data rate modes**

Looking at the preamble (SHR) part of a IEEE 802.15.4a frame, where single pulses $(N_c p_b = 1)$ are used, we find a peak power value of - 16.47dBm/50 MHz for pulses with √0.1 V amplitude. This is for the 1.x and 2.x modes (see Table V for the meaning of the modes) that the peak power for √0.1 amplitude pulses equals -12.04 dBm/50 MHz.

The values shown are taken from a 50 MHz bandwidth measurement. As shown in Figure 2, these values would be different for the higher $N_{cpb}$ values, when using a smaller RBW on the spectrum analyzer. This would cause an unnecessary decrease in pulse peak voltage and therefore output power and achievable distance for communication.

D. Measurement

To verify the approach of the disclosure, a measurement is carried out. The results of the peak EIRP measurement are shown in Figure 8. The square dots show the measured values, using a scaled measurement of 20 ns pulses in a 5 MHz IF bandwidth on the spectrum analyzer which corresponds to a measurement of 2 ns pulses in a 50 MHz IF bandwidth.

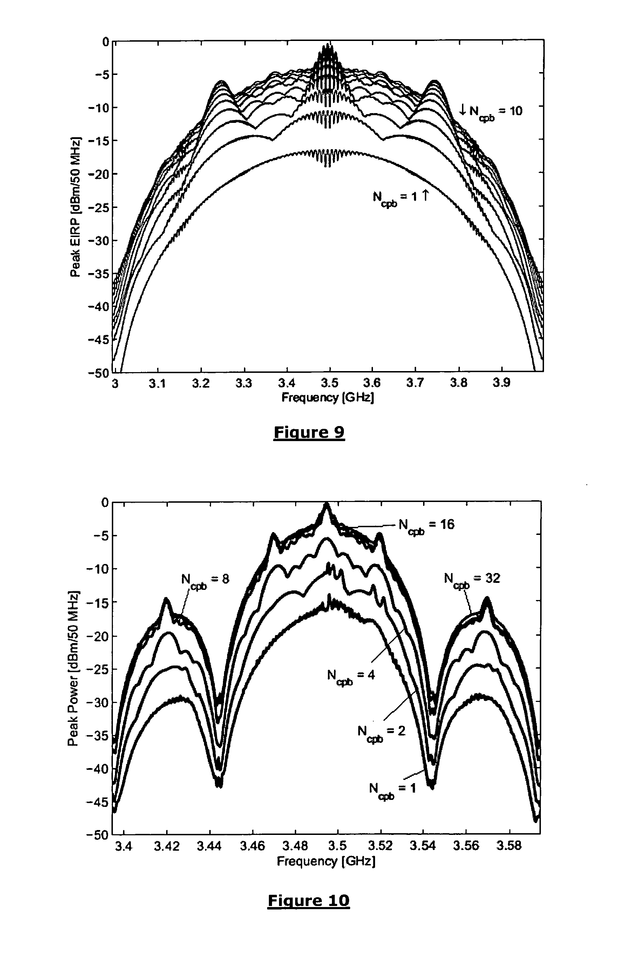

Figure 9 shows simulated results while Figure 10 shows measured results of a peak power spectrum for $N_{cpb}$ = 1 to $N_{cpb}$ = 32. Figure 10 corresponds to the measured values of Figure 8 (square dots) (the plotted peak power spectrum is measured using scaled pulses of 20 ns length and using a RBW = 5 MHz filter). It is shown that it results in a signal bandwidth which is 10 times smaller compared to Figure 9.

E. Conclusion

Above, a novel and more accurate peak power estimation method for impulse radio UWB systems has been shown. The method can be applied in the design of new wireless systems, when designing for maximum achievable distance. By analyzing the required measurement procedure a set of equations was derived matching simulated and measured signals. Compared to existing methods in use, this enables proper estimation and measurement interpretation of emerging, IEEE 802.15.4a-like, IR-UWB signals. In particular, using the proposed method enables usage of up to 16 to 24 dB more pulse amplitude, depending on the equipment available.

F. Appendix

Table V shows a definition of twelve different IEEE 802.15.4a data rate modes by mode numbers, which are used throughout the disclosure.

### TABLE V IEEE 802.15.4A DATA RATE MODES

| Model | Data rate [Mbps] | $N^{PHR}_{cpb}$ | $N^{PSDU}_{cpb}$ | mPRF[2] [MHz] | $N_{hop}$ |
|---|---|---|---|---|---|
| 1.1 | 0.11 | 128 | 128 | 15.6 | 8 |
| 1.2 | 0.85 | 16 | 16 | 15.6 | 8 |
| 1.3 | 6.81 | 16 | 2 | 15.6 | 8 |
| 1.4 | 27.24 | 16 | 1 | 15.6 | 8 |
| 2.1 | 0.11 | 32 | 32 | 3.9 | 32 |
| 2.2 | 0.85 | 4 | 4 | 3.9 | 32 |
| 2.3 | 1.70 | 4 | 2 | 3.9 | 32 |
| 2.4 | 6.81 | 4 | 1 | 3.9 | 32 |
| 3.1 | 0.11 | 512 | 512 | 62.4 | 2 |
| 3.2 | 0.85 | 64 | 64 | 62.4 | 2 |
| 3.3 | 6.81 | 64 | 8 | 62.4 | 2 |
| 3.4 | 27.24 | 64 | 2 | 62.4 | 2 |

[1] Data rate mode number, as used throughout this paper
[2] Mean Pulse Repetition Frequency - PSDU part of frame

**PART II: method for generating pulsed transmission signal**

The better knowledge of the relation between peak/average power and burst length leads to new insights is aspects of pulsed transmission signals. In particular, it is found that by controlling the amplitude of pulses in dependency of the burst length, the power of the transmission can be optimized without crossing the prescribed limits.

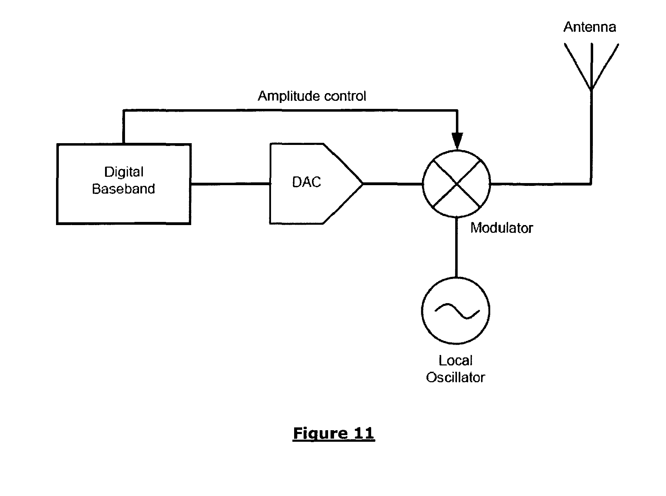

Accordingly, the invention provides a transmitter device as shown in figure 11. The device comprises a baseband section, formed by a digital baseband part and a digital-to-analog converter, which generates a baseband signal by encoding data (encoder setting the pulse polarity) with a predetermined spreading code. The resulting baseband signal (see fig. 1) comprises a plurality of transmission bursts 10, each of which comprises a train of pulses 14 defining the burst length. The digital-to-analog converted signal is fed to a modulator, which upconverts the signal by means of a signal carrier coming from a local oscillator. The upconverted signal is fed to an antenna for transmission.

The modulator is controlled by the digital baseband to modify the amplitude of each transmission burst individually on the basis of a relationship between the peak/average power level and the burst length. The modulator is preferably controlled in such a way that the peak/average power level of each transmission burst is modified towards the limit, i.e. approaches the limit as close as possible.

In this way, it is possible to transmit at higher output power. The performance of the wireless link can be enhanced and/or power consumption of the radio can be lowered. Using different amplitudes for different burst-length or codes can improve the integral wireless link performance.

The predetermined relationship between the peak/average power level and the burst length, which is used for determining the pulse amplitude to be applied, is preferably the relationship determined in part I above, but is not limited thereto.

The choice of imposing a limit for the average power or the peak power of the transmission signal can be made dependent on the pulse repetition frequency (PRF) of the pulses in the burst. For higher PRF the average power limitations are dominant, whereas for lower PRF the peak power limitations are dominant.

In the embodiment where the transmitter device generates a signal according to figure 1, the pulsed transmission signal comprises a plurality of frames. Each frame 11 can comprise a first part in which the transmission bursts have a first burst length and a second part in which the transmission bursts have a second burst length. A different amplitude sizing is applied over the first part with respect to the second part.

In particular, each frame can comprise a preamble of isolated pulses followed by a header part having a first set of the transmission bursts and a payload part having a second set of the transmission bursts. The header part can be the first part where the transmission bursts have the first burst length and the payload part can be the second part where the transmission bursts have the second burst length. Alternatively, the first and second parts can both be parts of the payload part of the frame. In general, with the transmitter device of figure 11 a plurality of different pulse amplitudes can be applied over the frame, for example a first amplitude over the header part and a second, third, ..., n-th amplitude over the payload part, i.e. a different amplitude for each burst of the payload part depending on its burst length.

**Claims**

1.    A method for generating a pulsed transmission signal, comprising the steps of

      - generating a plurality of transmission bursts by encoding data with a predetermined spreading code, each of said bursts comprising a train of adjacent pulses defining a burst length of the burst;
      - sizing the transmission bursts to a peak/average transmission power level within a predetermined limit, thereby forming said transmission signal;

      **characterized in that** for at least one of said plurality of bursts the sizing comprises the step of modifying the amplitude of the pulses of the burst on the basis of a predetermined relationship between the burst length and the peak/average transmission power level, said modification being determined such that the peak/average transmission power level is modified towards said predetermined limit.

2.    The method according to claim 1, comprising the step of selecting between limiting the peak transmission power level and limiting the average transmission power level, the selection being made on the basis of a pulse repetition frequency of the signal.

3.    The method according to claim 1 or 2, wherein said transmission signal comprises a plurality of frames, each frame comprising at least a first part in which the transmission bursts have a first burst length and a second part in which the transmission bursts have a second burst length and wherein a different amplitude sizing is applied over the first part with respect to the second part.

4.    The method according to claim 3, wherein each frame comprises a preamble of isolated pulses followed by a header part having a first set of said transmission bursts and a payload part having a second set of said transmission bursts.

5.    The method according to any one of the previous claims, wherein the predetermined relationship between the peak/average power and the burst length is defined by means of an equation, in which the peak/average power is dependent on the peak amplitude of pulses in the transmission signal, the number of bursts in the transmission signal taken into account, the load impedance of a transmitter used for transmitting the transmission signal, the burst length, minimal time between bursts and the spectrum analyzer's resolution band-width RBW.

6.    The method according to claim 5, wherein the peak power is determined by means of the following equation:

$$P_{peak} = \left[ \left( \frac{A}{\sqrt{2}} \sum_{i=0}^{n} \left\{ Q(\frac{t - T_b - iT_{bp}}{\sigma}) - \right. \right. \right.$$

$$\left. \left. \left. - Q(\frac{t - iT_{bp}}{\sigma}) \right\} \right)^2 \right] \frac{1}{R_{load}}$$

wherein

- $Ppeak$ is the peak power level in [Watt/BW] with BW being a RBW used in a spectrum analyzer measurement;
- A is a peak amplitude of pulses in said transmission signal in [V];
- $n$ is a number of bursts in said transmission signal taken into account;
- $Rload$ is a load impedance of a transmitter used for transmitting said transmission signal, in [Ω];
- Q is the one-dimensional Gaussian probability integral defined as:

$$Q(x) = \frac{1}{\sqrt{2\pi}} \int_{x}^{\infty} e^{-\frac{y^2}{2}} \, \mathrm{dy}$$

- $Tb$ is the burst length, in [s] and determined by the number of chips per burst multiplied by $T_{eff}$ which is an effective pulse width as defined by:

$$\tau_{\mathrm{eff}} = \int_{0}^{\tau_c} \frac{p(t)}{A} \, \mathrm{d}t$$

in which $\tau_c$ is the time interval which contains all the energy of pulse $p(t)$;
- $Tbp$ is the burst period, in [s];
- $\sigma$ is the spectrum analyzers RBW filter variance, determined by the BW of the filter as:

$$\sigma = \frac{\sqrt{2ln(10^{\frac{3}{20}})}}{\pi\mathrm{BW}}$$

**7.** A transmitter device comprising:

- a baseband section provided for generating a baseband signal comprising a plurality of transmission bursts by encoding data with a predetermined spreading code, each of said bursts comprising a train of adjacent pulses defining a burst length of the burst;
- a local oscillator for generating a signal carrier;
- a modulator connected to the baseband section and the local oscillator and provided for upconverting the baseband signal by means of the signal carrier to a transmission signal and therein sizing the transmission bursts to a peak/average transmission power level within a predetermined level; and
- an antenna for transmitting the transmission signal;

**characterized in that** the transmitter device comprises a control means for controlling the modulator to modify the amplitude of the pulses of each burst individually on the basis of a predetermined relationship between the burst length and the peak/average transmission power level.

8. The transmitter device of claim 7, wherein the baseband section comprises a digital part and a digital-to-analog converter and wherein the control means is formed by a part of the digital part of the baseband section.

9. The transmitter device of claim 7 or 8, wherein the control means is provided for performing the steps of any one of the claims 2-6.

**Figure 1**

**Figure 2**

**Figure 3**

$$\left[\frac{A}{\sqrt{2}}\left(1-2Q\left(\frac{\tau_{\mathit{eff}}}{2\sigma}\right)\right)\right]^2\frac{G_{\mathit{ant}}}{R_{\mathit{load}}}$$

**Figure 4**

**Figure 5**

**Figure 6**

**Figure 7**

**Figure 8**

**Figure 9**

**Figure 10**

**Figure 11**

Europäisches
Patentamt

European
Patent Office

Office européen
des brevets

# EUROPEAN SEARCH REPORT

Application Number

EP 10 17 0853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/203795 A1 (WELBORN MATTHEW L [US] ET AL) 14 September 2006 (2006-09-14)<br>* paragraph [0002] - paragraph [0003] *<br>* paragraph [0010] *<br>* paragraph [0038] - paragraph [0050] *<br>* paragraph [0068] - paragraph [0071] *<br>----- | 1-9 | INV.<br>H04B1/69 |
| X | PFLUG H W: "UWB Pulse Shaping for IEEE 802.15.4a"<br>MICROWAVE CONFERENCE, 2008. EUMC 2008. 38TH EUROPEAN, IEEE, PISCATAWAY, NJ, USA, 27 October 2008 (2008-10-27), pages 713-716, XP031407259<br>ISBN: 978-2-87487-006-4 | 1-5,7-9 | |
| A | * sections I-V *<br>----- | 6 | |
| X | MURTHY T S N ET AL: "Tunable pre-distorter for PAPR mitigation in MB-OFDM UWB signals"<br>ULTRA-WIDEBAND, 2008. ICUWB 2008. IEEE INTERNATIONAL CONFERENCE ON, IEEE, PISCATAWAY, NJ, USA, 10 September 2008 (2008-09-10), pages 43-46, XP031350201<br>ISBN: 978-1-4244-2216-6 | 1,7 | TECHNICAL FIELDS SEARCHED (IPC)<br>H04B |
| A | * sections I-V *<br>----- | 2-6,8,9 | |

The present search report has been drawn up for all claims

| Place of search | Date of completion of the search | Examiner |
|---|---|---|
| The Hague | 5 October 2010 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 326 021 A1

## ANNEX TO THE EUROPEAN SEARCH REPORT
## ON EUROPEAN PATENT APPLICATION NO.

EP 10 17 0853

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2010

| Patent document cited in search report | Publication date | Patent family member(s) | Publication date |
|---|---|---|---|
| US 2006203795 A1 | 14-09-2006 | US 2009268701 A1<br>WO 2006098891 A2 | 29-10-2009<br>21-09-2006 |

EPO FORM P0459